(19) Europäisches Patentamt
European Patent Office
Office européen des brevets

(11) **EP 0 613 750 B1**

(12) **FASCICULE DE BREVET EUROPEEN**

(45) Date de publication et mention
de la délivrance du brevet:
**13.11.1996 Bulletin 1996/46**

(51) Int. Cl.$^6$: **B23K 11/25**

(21) Numéro de dépôt: **93500027.3**

(22) Date de dépôt: **04.03.1993**

(54) **Système et méthode de contrôle électronique du procédé de soudage dans une installation de soudage à résistance**

System und Verfahren zur elektronischen Steuerung eines Schweissverfahrens in einer Widerstandsschweissanlage

System and method for the electronic control of the welding process in a resistance welding installation

(84) Etats contractants désignés:
**DE ES FR IT PT**

(43) Date de publication de la demande:
**07.09.1994 Bulletin 1994/36**

(73) Titulaire: **SERRA SOLDADURA, S.A.**
**E-08040 Barcelona (ES)**

(72) Inventeur: **Barrachina Mir, Ramòn**
**E-08902 l'Hospitalet de Llobregat (ES)**

(74) Mandataire: **Manresa Val, Manuel et al**
**Girona n. 34**
**08010 Barcelona (ES)**

(56) Documents cités:
EP-A- 0 256 183          DE-A- 3 332 697
US-A- 4 493 040          US-A- 4 634 830
US-A- 4 851 635

Remarques:
Le dossier contient des informations techniques présentées postérieurement au dépôt de la demande et ne figurant pas dans le présent fascicule.

## Description

La présente invention se réfère à un système et un méthode de contrôle électronique du procédé de soudage dans une installation de soudage à résistance, tel qu'une pince manuelle, pince robotisée, installation ou machine multipoint, où le réglage du courant du primaire d'un transformateur de soudage se fait au moyen d'un contacteur électronique comprenant deux thyristors en montage antiparallèle commandés par une unité de contrôle du déclenchement de ces thyristors commandé par un microprocesseur ou micro-ordinateur, afin que la valeur efficace du courant $I_S$ du secondaire de ce transformateur ou courant de soudage reste, durant le temps de soudage, constante et égale à une valeur préétablie lp, ou courant programmé, indépendamment des changements de l'impédance du circuit de soudage par lequel circule ce courant.

Des contrôles électroniques basés sur ledit principe sont décrits dans les brevets: US-A-4851635, US-A-4493040, US-A-4745255, EP-A-0256183, EP-A-0350013, DE 4101648 et DE-A-3332697.

En général, ces contrôles manquent d'adaptation ou de réponse suffisamment rapide aux conditions variables du circuit de soudage, à cause des modifications de l'impédance qui se produisent durant le déplacement spatial des organes de soudage (auto-inductances changeantes, etc.) par les conditions variables de l'environnement, par les altérations dans la géométrie dudit circuit (branchements souples et d'une certaine longueur), et par les variations propres de résistance durant la soudure et usure ou remplacement des électrodes.

De plus, les contrôles électroniques connus pour soudage face à des conditions nouvelles telles qu'impédances changeantes face à des pièces à souder ou des courants très différents, pré-programmées, associées à des impédances très similaires ou complètement différentes, et bien que le facteur de puissance et d'intensité maximale à fournir à la pièce à souder soit connu, normalement dans la séquence initiale ils réalisent une série d'essais sans succès (étant donnés comme acceptables à ce jour, dans ce secteur de la technique, jusqu'à deux soudures manquées) avant d'arriver à fournir à la charge une intensité efficace ls de soudure qui remplisse les conditions requises de rester constante et égale à la valeur programmée lp dans chaque demi-périodes de la tension de la ligne $U_L$ qui alimente le primaire du transformateur de soudage.

Le brevet US 4.634.830 décrit une méthode de contrôle de courant pour une machine à souder par résistance, comprenant les étapes suivantes:

- détecter le courant qui circule au travers du bobinage primaire ou secondaire d'un transformateur de soudage;
- appliquer une première demi-onde de courant à un circuit de soudage, ledit courant ayant un premier angle de déclenchement ou angle de contrôle de phase $\alpha_1$, d'environ 120º - 150º.
- pendant cette première demi-onde:

  - mesurer l'angle de conduction du courant dans le circuit de soudage;
  - détecter une valeur de courant efficace $I_L$ dans le circuit de soudage;

- calculer l' angle de charge ou angle de facteur de puissance $\Phi$, de la machine à souder par résistance à partir des valeurs mesurées d'angle de conduction $\delta$ et ledit premier angle de déclenchement ou angle de contrôle de phase $\alpha_1$;
- calculer le courant maximal $I_{LO}$ qui peut être appliqué pour les conditions particulières de charge, à partir de l'angle de facteur de puissance calculé $\Phi$ et du courant de soudage $I_L$ ;
- calculer un deuxième angle de déclenchement $\alpha_2$ pour la demi-onde suivante de courant de soudage pour produire un courant de soudage égal à un courant de soudage pre-programmé. Ladite valeur est calculée en remplaçant le courant de soudage désiré dans une équation qui relie le courant de soudage à l'angle du facteur de puissance $\Phi$ , angle de conduction $\delta$ , courant maximum abordable $I_{LO}$ et angle de contrôle de phase $\alpha$; et
- appliquer une deuxième demi-onde de courant de soudage avec ledit angle de déclenchement $\alpha_{i+1}$ ou angle de contrôle de phase.

Ainsi donc, dans la méthode du brevet US 4634830, le thyristor déclenche toujours dans la première demi-période entre 120 et 150, et l'expérience de soudages précédentes n'est pas utilisée. L'angle de déclenchement maximal 150º se justifie par des difficultés de déclenchement des thyristors. Cependant, il a été vérifié que ces difficultés n'existent pas à 150º ni même à 170º, quoique au-delà de 130º la discontinuité de courant excessif peut donner pour résultat des effets thermiques négatifs pouvant endommager la qualité du soudage.

Dans le contrôle du brevet US. 4634830, un ensemble de valeurs de courant de soudage désirées pour chaque demi-période est préalablement établi. Lesdites valeurs peuvent être augmentés pour obtenir un "upslope", mais ne peuvent pas être altérées durant le soudage pour compenser des erreurs. Par conséquent, les erreurs du système peuvent s'accumuler durant un soudage avec le résultat que la puissance totale fournie le long de tout le soudage peut varier sensiblement par rapport à la puissance totale désirée.

Un problème additionnel associé à cette méthode de l'état de la technique est celui de la synchronisation "timing". Dans cette méthode, l'angle de déclenchement de chaque demi-période est calculé à partir du résultat de la demi-période précédente. Néanmoins, du point de vue pratique, on a trouvé que c'était impossible de compléter les calculs nécessaires dans un temps si court sans y introduire des erreurs importantes. De plus, même si ce temps est très court, il impliquera que le travail de la machine de soudage sera limité à des puissance éloignées de la puissance maximale car, par exemple, un temps de 1 ms implique un angle de 18º d'éloignement de ladite puissance maximale. Et de plus l'application d'une valeur non précise pour la deuxième demi-période et pour les suivantes, impliquera le risque que le procédé se déséquilibre.

L'invention a pour objet résoudre cette problématique et, notamment, d'obtenir des conditions de travail du contrôle qui représente un comportement de réglage ayant une réponse pratiquement immédiate aux variations d'impédance ou de courant auparavant décrites, et, donc, adaptable sur le champ aux conditions les plus diverses de pièces à souder.

A cet effet, selon l'invention, dans toutes et chacune des demi-périodes du temps de soudage à partir de la troisième demi-période i+2 de la tension de ligne $U_L$ alimentant le primaire du transformateur de soudure, il est déterminé l'angle de déclenchement de chacun des thyristors du contacteur électronique, par rapport au passage par zéro de ladite tension de ligne $U_L$ sur la base des points suivants:

1.- angle de déclenchement $\psi_i$ utilisé deux demi-périodes avant;

2) temps de conduction $t_{Ci}$ pendant lequel un courant a circulé par le circuit secondaire du transformateur de soudage, suite au déclenchement du thyristor correspondant du contacteur électronique utilisé deux demi-périodes avant;

3) valeur de l'intensité efficace $I_{Si}$ qui a circulé dans ce même temps de conduction $t_{Ci}$ dans le circuit secondaire du transformateur de soudage comprenant la charge à souder;

4) déviation de l'intensité efficace $I_{Si}$ par rapport à celle qui est souhaitée Ip,

des points qui permettent de plus de déterminer l'angle de la charge $\phi$ et le courant maximum $I_{max}$ qui peut être fourni aux conditions de la charge de chaque moment, qui donnera information au contrôle de la plage d'ajustage possible. Les angles de déclenchement des deux demi-périodes initiales $\psi_i$ et $\psi_{i+1}$ étant le résultat d'un calcul basé sur la valeur du courant programmé Ip, qu'il faut conserver constant, et sur les valeurs de l'angle de charge $\phi$ et courant maximum $I_{max}$ calculées dans un soudage précédent, de sorte que l'intensité efficace fourni à la charge $I_{Si}$ soit égale à Ip dans chacune des demi-périodes suivantes.

Pour toute clarté, dans ce texte, on comprendra comme angle de charge $\phi$ la différence de phase entre tension et courant dans le circuit de soudage en régime permanent sinusoïdal. La valeur peut en être exprimée également par le quotient suivant:

$$\phi = \text{arc tg } \frac{W L_t}{R_t + n^2 R_p}$$

où:

- $L_T$ est l'inductance totale vue depuis les bornes du transformateur de soudage;
- $R_T$ est la résistance totale des bobinages du transformateur de soudage;
- n est le rapport de spires du transformateur de soudage et Rp la résistance dans le point de soudure;

Dans le cas d'un soudage sans antécédents, les angles de déclenchement $\psi_i$ et $\psi_{i+1}$ des deux demi-périodes initiales ont une valeur arbitraire mais qui donne lieu à une intensité efficace $I_S$ minimale ou non dangereuse de manière que seulement dans ce cas, les deux premières demi-périodes de la première soudure (qui comprend normalement plus de 8 demi-périodes) il y aura une différence entre les valeurs de $I_{Si}$ et de Ip.

En général le contrôle travaille de manière que les angles de déclenchement $\psi_i$ et $\psi_{i+1}$ des deux demi-périodes initiales sont déterminées à partir de la valeur du courant programmé Ip qu'il faut conserver constante, et des valeurs d'un angle de charge $\phi$ et d'un courant maximum d'intensité $I_{max}$ déterminées dans un soudage précédent et stockés dans une mémoire du microprocesseur ou micro-ordinateur.

Selon l'invention le temps de conduction $t_{ci}$ du courant d'intensité $i_{Si}$ qui circule par le circuit secondaire du transformateur de soudage, est mesurée à chaque demi-onde, dès l'instant du déclenchement de chaque thyristor du contacteur électronique de thyristors, du circuit primaire du transformateur de soudage, jusqu'à ce que l'intensité du courant du circuit secondaire $i_{Si}$ devienne égal à zéro ou à une valeur suffisamment faible.

Il est aussi caractéristique de la méthode et du système selon l'invention d'effectuer, avant le début d'une nouvelle période de la tension de ligne $U_L$ qui alimente le primaire du transformateur de soudage les opérations suivantes

- comparer l'intensité efficace déterminée au secondaire du transformateur $I_{Si}$ avec celle programmée Ip et déterminer une valeur e = Ip - $I_{Si}$ de dérivation;
- déterminer un angle de la charge $\phi_i$ à partir de la valeur de l'angle de déclenchement $\psi_i$ du thyristor utilisé au début de cette période de la tension de ligne $U_L$, et du temps de conduction $t_{ci}$ pendant lequel le courant a circulé par le circuit secondaire du transformateur de soudage, à conséquence du déclenchement du correspondant thyristor;
- déterminer un courant maximum $I_{max}$ pouvant être fourni dans les conditions de la charge de chaque moment à partir de l'angle de charge $\phi_i$, de l'angle de déclenchement $\psi_i$ et de l'intensité efficace $I_{Si}$ déterminée et,
- déterminer un angle de déclenchement $\psi_{i+2}$ pour la période suivante de la tension de ligne $U_L$, comptée à partir du nouveau passage par zéro de cette tension de ligne $U_L$, en raison de l'intensité maximale $I_{max}$ déterminée avant, de l'intensité programmée Ip, et de l'angle de charge $\phi_i$ mentionné.

Dans la méthode et système selon l'invention les calculs de l'angle de charge $\phi_i$ et du $I_{max}$ cités, se font en consultant une liste de valeurs sous forme de tableaux, qui répondent à des conditions de soudage préétablies, déterminées par itération à partir du rapport qui relie le quotient $Ip/I_{max}$ à l'angle de déclenchement $\psi$ et l'angle de charge $\phi$ pour un temps de conduction $t_c$ dans le circuit secondaire du tranformateur de soudage, donné, dont la liste de valeurs est stockée dans une mémoire du microprocesseur ou micro-ordinateur, et comporte des opérations qu'effectue le microprocesseur ou le micro-ordinateur en ayant accès à cette liste de valeurs stockés dans un mémoire EPROM, à partir des valeurs d'un temps de conduction $t_c$ et d'un angle de déclenchement $\psi$ correspondant à deux demi-périodes antérieures de la tension de ligne $U_L$ qui alimente le primaire du transformateur de soudage.

De cette façon, dans la méthode et le système de contrôle proposé, on corrige de façon dynamique le long d'une soudure, le courant à fournir au circuit de soudage, de sorte que l'expérience de chaque demi-période de courant de soudage permet que le contrôle soustrait la valeur de correction pour une demi-période de courant de soudage ultérieur, dans la période suivante du courant $U_L$ de ligne qui alimente le transformateur de soudage.

La méthode comprend aussi les étapes de:

- stocker la valeur de l'intensité efficace $I_{Si}$ déterminée à chaque demi-période de conduction des thyristors du contacteur électronique;
- comparer dans toutes et chacune des demi-périodes de la tension de ligne $U_L$ qui alimente le primaire du transformateur de soudage, la valeur totale accumulée jusqu'à ladite demi-période, de l'intensité efficace $I_{Si}$ qui a circulée par le circuit secondaire le long du temps de soudage écoulé, avec la valeur de l'intensité programmée Ip, en considérant qu'elle a circulé durant ce même temps et déterminer la valeur de la différence $\underline{d}$.
- modifier le nouveau angle de déclenchement $\psi_{i+2}$ des thyristors en raison de la valeur $\underline{d}$ de manière à rapprocher l'intensité efficace totale dans toutes les demi-périodes du temps de soudage écoulé à l'intensité Ip totale pendant ce même temps.

Ainsi, dans tous les cas à partir de la troisième semi-période du courant de soudure, et , donc, durant la première soudure, on obtient, en choisissant l'angle de déclenchement juste, faire que l'intensité efficace $I_S$ corresponde avec la valeur Ip programmée, conformément à l'objet de l'invention.

Le système de contrôle électronique construit pour la mise en oeuvre de la méthode objet de l'invention comprend en général:

- des moyens détecteurs du passage par zéro de l'$U_L$ qui alimente le primaire du transformateur de soudage;
- des moyens pour activer le déclenchement de chaque thyristor du contacteur électronique avec un angle/temps de déclenchement $\psi$ , $t_d$ , déterminé;
- des moyens pour déterminer la valeur de l'intensité efficace $I_S$ du courant qui a circulé à travers le circuit secondaire du transformateur de soudage suite au déclenchement dudit thyristor;
- des moyens détecteurs du passage par zéro de l'intensité $i_S$ qui circule à travers le circuit secondaire du transformateur de soudage, suite au déclenchement du thyristor correspondant audit contacteur électronique de thyristors;
- des moyens pour stocker et accumuler les valeurs d'intensité efficace $I_{Si}$ déterminées à chaque demi-période du temps i de soudage;
- des moyens de stockage de listes de valeurs sous formes de tableaux en raison d'angles de charge $\phi$ , de temps de conduction $t_c$ et d'angles de déclenchement $\psi$ , répondant à des conditions de soudage préétablies et déterminées à partir du rapport reliant le quotient $I_s/I_{max}$ à l'angle de déclenchement $\psi$ et à l'angle de charge $\phi$ pour un temps $t_c$ de conduction du courant $i_S$ dans le circuit secondaire, donné.

Un exemple de réalisation de l'invention est montré dans le dessin annexé, dans lequel:

La figure 1 montre les trois premières demi-périodes du courant de soudage, avec l'indication de tous les paramètres utilisés à ce jour dans la méthode.
La figure 2 montre une possible exécution d'un contrôle électronique conformément à l'invention, basé sur un microprocesseur ou micro-ordinateur, qui doit être jugé au titre non limitatif.

Dans les deux figures citées:

$U_L$ . tension de ligne alimentant le circuit primaire d'un transformateur 10
Up: tension dans les bornes du primaire du transformateur de soudage;
Us: tension dans le secondaire du transformateur de soudage;
$i_S$: courant qui circule à travers le secondaire du transformateur de soudage;
$\psi$ , $t_d$ : angle de déclenchement et temps de déclenchement du thyristor;
$\Theta$, $t_C$ : angle de conduction et temps de conduction du courant qui circule dans le circuit secondaire du transformateur de soudage suite au déclenchement du thyristor;
Ts: temps d'échantillonnage du courant $i_S$; du circuit de soudage;
$L_1$ , $L_2$: lignes du réseau d'alimentation;

Vsc: tension aux bornes d'une sonde d'acquisition de courant $sc_1$ ;

$sc_2$, $sc_3$ : d'autres sondes pour d'autres circuits de soudage associés au transformateur 10;

11: microprocesseur ou micro ordinateur; $T_1$ , $T_2$ , $T_3$ temporisateurs associés au microprocesseur 11;

12: circuit à impulsion;

13: contacteur électronique à deux thyristors en montage antiparallèle;

14: circuit de synchronisme

15: transformateur pour alimentation au circuit 14 et au microprocesseur ou micro ordinateur 11;

16: circuit multiplexeur;

17: circuit intégrateur;

18: amplificateur programmable, avec sélection du facteur d'amplification depuis le microprocesseur ou le micro-ordinateur 11;

19: circuit détecteur de passage par zéro;

20. circuit Sample & Hold;

21: convertisseur analogique-digital;

22: mémoire EPROM

23: mémoire RAM

24: point de soudure

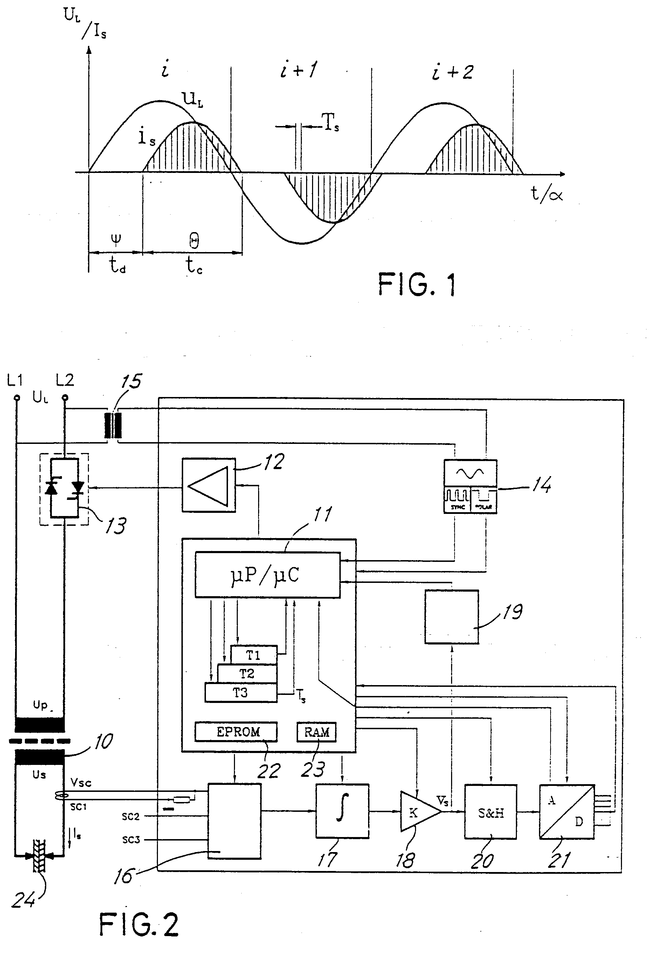

L'opératoire du contrôle de la figure 2, en se tenant à la séquence montrée dans la figure 1, ou on a représenté les trois premières demi-périodes du temps de soudage, est la suivante:

A partir d'une détection du passage par zéro de $U_L$ par le circuit de synchronisme -14-, il est générée une interruption du microprocesseur/micro-ordinateur -11- qui active le temporisateur $T_1$ chargé avec une valeur égale à l'angle de déclenchement $\psi_i$ du premier thyristor du contacteur électronique. Lorsque le temporisateur $T_1$ arrive à zéro, il est généré une autre interruption du microprocesseur -11-, ce qui: déclenche le contacteur de thyristors -13-, met à zéro un deuxième temporisateur $T_2$ et active un troisième temporisateur $T_3$ en mode de génération d'impulsions, qui, pour chaque Ts génère une interruption dans laquelle on lit la valeur de Is à la sortie du convertisseur analogique-digital -21-. Ainsi, et au moyen d'échantillonnage et durant le temps de conduction $t_{Ci}$ on effectue une mesure des valeurs instantanées du courant du circuit secondaire Is ou courant de soudure qui est explorée avec une fréquence multiple de celle de la ligne et suffisamment élevée comme pour extraire un nombre suffisant de valeurs qui facilite le calcul de la Is efficace qui circule par le secondaire du transformateur de soudure. Lorsqu'on détecte le passage par zéro de la tension Vs le circuit - 19- génère une interruption du microprocesseur/micro-ordinateur -11- qui détient le temporisateur $T_2$ qui aura mesuré le temps de conduction $t_{Ci}$ et détient également le temporisateur $T_3$ et alors , un feux s'active qui fera que le microprocesseur ou micro-ordinateur 11 réalise un travail de calcul du nouvel angle de déclenchement $\psi_{1+2}$ pour la troisième semi-période I+2, conformément à l'opératoire citée auparavant et en consultant la liste de valeurs sous forme de tableaux stockées dans la mémoire EPROM -22-. Dans la mémoire RAM -23- il est stocké la valeur totale de l'intensité de la demi-période, et le reste de valeurs calculées durant le cycle. Il n'a été pas faite mention à la logique associe "glue logic" qui intègre le microprocesseur ou micro ordinateur pour la réalisation de toutes lesdites taches.

## Revendications

1. Système de contrôle électronique du procédé de soudage dans une installation de soudage à résistance, tel qu'une pince manuelle, pince robotisée, installation ou machine multipoint, où le réglage du courant du primaire d'un transformateur de soudage (10) se fait au moyen d'un contacteur électronique (13) comprenant deux thyristors en montage antiparallèle commandés par une unité de contrôle du déclenchement de ces thyristors gérée par un microprocesseur ou micro-ordinateur (11), afin que la valeur efficace du courant $I_S$ du secondaire de ce transformateur de soudage reste, durant le temps de soudage, constante et égale à une valeur préétablie lp, ou courant programmé, indépendamment des changements de l'impédance du circuit de soudage par lequel circule ce courant, <u>caractérisé</u> en ce qu'il comprend, associés audit microprocesseur ou micro-ordinateur:

- des moyens détecteurs du passage par zéro de la tension de ligne $U_L$ qui alimente le primaire du transformateur de soudage;
- des moyens (12) pour activer le déclenchement de chaque thyristor du contacteur électronique avec un angle/temps de déclenchement $\psi_i$, $t_d$ , déterminé;
- des moyens pour déterminer la valeur de l'intensité efficace $I_{Si}$ du courant qui a circulé à travers le circuit secondaire du transformateur de soudage suite au déclenchement dudit thyristor;
- des moyens détecteurs du passage par zéro de l'intensité $i_{Si}$ qui circule à travers le circuit secondaire du transformateur de soudage, suite au déclenchement du thyristor correspondant audit contacteur électronique de thyristors;
- des moyens (23) pour stocker et accumuler les valeurs d'intensité efficace $I_{Si}$ déterminées à chaque demi-période du temps de soudage;
- des moyens (22) de stockage de listes de valeurs sous formes de tableaux en raison d'angles de charge $\phi$ , de temps de conduction $t_c$ et d'angles de déclenchement $\psi$ , répondant à des conditions de soudage préétablies et déterminées à partir du rapport reliant le quotient $I_s$ /$I_{max}$ à l'angle de déclenchement et l'angle de charge $\phi$ pour un temps $t_c$ de conduction du courant dans le circuit secondaire, donné.

2. Méthode de contrôle électronique du procédé de soudage dans une installation de soudage par résistance, tel qu'une pince manuelle, pince robotisée, installation ou machine multipoint, où le réglage du courant du primaire d'un transformateur de soudage se fait par l'intermédiaire d'un contacteur électronique comprenant deux thyristors en montage antiparallèle, commandés par une unité de contrôle du déclenchement de ces thyristors, gérée à son tour par un microprocesseur ou micro-ordinateur, afin que la valeur efficace $I_S$ du courant du secondaire dudit transformateur de soudage reste, durant le temps de soudage, constante et égale à la valeur préétablie Ip ou courant programme, indépendamment des changements de l'impédance du circuit de soudage dans lequel circule ce courant, comprenant les étapes suivantes:

a) détecter pour chaque demi-période de la tension de ligne $U_L$ qui alimente le primaire du transformateur de soudage le moment de passage par zéro de ladite tension de ligne $U_L$;

b) déclencher à chacune de ces demi-périodes un thyristor du contacteur électronique pour fournir une demi-onde de courant dans le bobinage secondaire du transformateur de soudage, avec un angle de déclenchement $\Psi_i$ prédéterminé;

c) mesurer pour chacune de ces demi-périodes la valeur de l'intensité efficace $I_{si}$ dans le circuit secondaire du transformateur de soudage comprenant la charge à souder, et déterminer l'angle de conduction $\Theta_i$ correspondant à ce courant secondaire

d) à chacune de ces demi-périodes déterminer un angle de la charge $\phi_i$ à partir de la valeur de l'angle de déclenchement $\Psi_i$ du thyristor utilisé au début de cette période de la tension de ligne $U_L$, et de l'angle de conduction $\Theta_i$ déterminé dans l'étape c),

e) déterminer pour chacune de ces demi-périodes l'intensité maximale $I_{max}$ pouvant être fournie dans les conditions de la charge de chaque moment à partir de l'angle de la charge $\phi_i$ déterminé à l'étape d), de l'angle de déclenchement $\Psi_i$ utilisé à cette étape et de l'intensité efficace $I_{si}$ mesurée à l'étape c) et, CARACTÉRISÉE en ce qu'elle comporte les étapes additionnelles suivantes:

f) pour chaque demi-période de la tension de ligne $U_L$ qui alimente le primaire du transformateur de soudage, additionner la valeur de l'intensité efficace $I_{si}$ mesurée à l'étape c) à un stock de toutes ces valeurs des périodes antérieures pour obtenir une valeur d'accumulation totale;

g) pour chacune de ces demi-périodes comparer ladite intensité efficace $I_{Si}$ mesurée à l'étape c) avec celle programmée Ip et déterminer une valeur $\underline{e} = Ip - I_{si}$; de dérivation;

h) déterminer pour chaque demi-période une valeur de différence accumulée $\underline{d}$, à partir de la différence entre la valeur d'accumulation totale obtenue dans l'étape f) et une valeur accumulée équivalente obtenue en considérant que l'intensité programmée $I_p$ aurait circulée durant ce même nombre de demi-périodes;

k) calculer pour chaque demi-période un angle de déclenchement $\phi_{i+2}$ pour la période suivante de la tension de ligne $U_L$, comptée à partir du nouveau passage par zéro de cette tension de ligne $U_L$, en raison de la valeur $\underline{e}$ de dérivation, de la valeur différence $\underline{d}$ accumulé, de l'intensité maximale $I_{max}$ déterminée à l'étape e), de l'intensité programmée Ip et de l'angle de la charge $\phi_i$ déterminé à l'étape d).

3. Méthode, selon la revendication 2, caractérisée en ce que l'angle de conduction $\Theta_i$ du courant d'intensité efficace $i_{Si}$ qui circule par le circuit secondaire du transformateur de soudage, est mesurée à chaque demi-onde, dès l'instant du déclenchement de chaque thyristor du contacteur électronique de thyristors, du circuit primaire du transformateur de soudage, jusqu'à ce que l'intensité du courant du circuit secondaire $i_{si}$ devienne égal à zéro ou à une valeur suffisamment faible.

4. Méthode selon la revendication 2, caractérisée en ce que l'angle de déclenchement $\Psi_{i+1}$ de la deuxième demi-période de la tension du ligne $U_L$ qui alimente le primaire du transformateur de soudure, à partir du passage par zéro de cette tension de ligne $U_L$, et qui active le deuxième thyristor du contacteur électronique, a une valeur identique à l'angle de déclenchement du premier thyristor $\Psi_i$.

5. Méthode, selon la revendication 2, caractérisée en ce que les angles de déclenchement $\Psi_1$ et $\Psi_2$ des deux demi-périodes initiales sont déterminés à partir de la valeur du courant programmé Ip qu'il faut conserver constante, et des valeurs d'un angle de la charge $\phi$ et d'un courant maximum d'intensité $I_{max}$ déterminées dans un soudage précédent et stockés dans une mémoire du microprocesseur ou micro-ordinateur.

6. Méthode selon la revendication 2, caractérisée en ce que dans le cas d'un soudage sans antécédents, les angles de déclenchement $\Psi_1$ et $\Psi_2$ des deux demi-périodes initiales ont une valeur arbitraire mais qui donne lieu à une intensité efficace $I_S$ minimale ou non dangereuse.

**7.** Méthode selon la revendication 2, caractérisée en ce que l'étape k) comporte une phase de consultation à une liste de valeurs sous forme de tableaux, qui répondent à des conditions de soudage préétablies, déterminées à partir du rapport qui relie le quotient lp/$I_{max}$ à l'angle de déclenchement Ψ et l'angle de la charge φ pour un angle de conduction $\Theta_c$ donné, cette liste de valeurs étant stockée dans une mémoire du microprocesseur ou micro-ordinateur, et comporte des opérations qu'effectue le microprocesseur ou le micro-ordinateur en ayant accès à cette liste de valeurs à partir des valeurs d'un angle de conduction $\Theta_{ci}$ et d'un angle de déclenchement $\Psi_{i-2}$ correspondant à deux demi-périodes antérieures de la tension de ligne $U_L$ qui alimente le primaire du transformateur de soudage.

**Claims**

**1.** A system for electronically controlling the welding process in a resistance welding plant such as a manual pincer gun, a robotized pincer gun or a multispot welding plant or machine, wherein the control of the current of the primary coil of a welding transformer (10) is carried out by means of an electronic contactor (13) comprising two thyristors in antiparallel arrangement operated by a control unit controlling the firing of said thyristors, said control unit being in its turn governed by a microprocessor or microcomputer (11) in order to achieve that the effective current value $I_s$ of the secondary coil of said welding transformer remains constant and equal to a preset value $I_p$ or programmed current value during the welding time irrespective of the changes in the impedance of the welding circuit through which said current flows; **characterized** in that it comprises associated to said microprocessor or microcomputer:

- means for detecting the zero crossing point of the line voltage $U_L$ feeding the primary coil of the welding transformer;
- means (12) to trigger the firing of each thyristor of the electronic contactor with a given firing angle/time $\Psi_i;t_d$;
- means for determining the effective current value $I_{si}$ of the current having flown through the secondary circuit of the welding transformer as a consequence of the firing of said thyristor;
- means for detecting the zero crossing point of the current $i_{si}$ flowing through the secondary circuit of the welding transformer after the firing of the thyristor corresponding to said thyristorized electronic contactor;
- means (23) for storing and accumulating the effective current values $I_{si}$ determined at each semiperiod of the welding time;
- means (22) for storing lists of values arranged as data tables as per power factor angles φ, conduction times $t_c$ and firing angles Ψ corresponding to preset welding conditions determined from the relationship linking the quotient $I_s/I_{max}$ with the firing angle Ψ and the power factor angle φ for a current conduction time $t_c$ in the given secondary circuit.

**2.** A method for electronically controlling the welding process in a resistance welding plant or machine such as a manual pincer gun, a robotized pincer gun or a multispot welding plant or machine, wherein the control of the current of the primary coil of a welding transformer is carried out by means of an electronic contactor comprising two thyristors in antiparallel arrangement operated by a control unit controlling the firing of said thyristors, said control unit being in its turn governed by a microprocessor or microcomputer in order to achieve that the effective current value $I_s$ of the secondary coil of said welding transformer remains constant and equal to a preset value $I_p$ or programmed current value during the welding time irrespective of the changes in the impedance of the welding circuit through which said current flows, comprising the following stages:

a) detecting for each semiperiod of the line voltage $U_L$ feeding the primary coil of the welding transformer the zero crossing instant of said line voltage $U_L$;
b) firing at each of said semiperiods a thyristor of the electronic contactor in order to provide a current half-wave in the secondary coil of the welding transformer, with a preset firing angle $\Psi_i$;
c) metering for each of said semiperiods the effective current value $I_{si}$ in the secondary circuit of the welding transformer comprising the load of the part to be welded, and determining the conduction angle $\Theta_i$ corresponding to said secondary current;
d) determining in each of said semiperiods a power factor angle $\phi_i$ from the value of the firing angle $\Psi_i$ of the thyristor used at the start of said period of the line voltage $U_L$ and from the conduction angle $\Theta_i$ determined at stage c);
e) determining for each of said semiperiods the maximum current $I_{max}$ that can be supplied under the conditions of the load of the part being welded at each moment from the power factor angle $\phi_i$ determined at stage d), from the firing angle $\Psi_i$ used at this stage, and from the effective current value $I_{si}$ metered at stage c); **characterized** in that it comprises the following additional stages:
f) for each semiperiod of the line voltage $U_L$ feeding the primary coil of the welding transformer, adding the effective current value $I_{si}$ metered at stage c) to a stock of all these values of the previous periods in order to obtain a total accumulation value;

g) for each of said semiperiods, comparing said effective current value $I_{si}$ metered at stage c) with the programmed value $I_p$, and determining a drift value $\underline{e} = I_p - I_{si}$;

h) determining for each semiperiod an accumulated difference value $\underline{d}$ from the difference between the total accumulation value obtained at stage f) and a corresponding accumulated value obtained by assuming that the programmed current $I_p$ had been flowing during said same number of semiperiods;

k) calculating for each semiperiod a firing angle $\phi_{i+2}$ for the next period of the line voltage $U_L$ as from the new zero crossing point of said line voltage $U_L$, taking into account the drift value $\underline{e}$, the accumulated difference value $\underline{d}$, the maximum current $I_{max}$ determined at stage e), the programmed current $I_p$ and the power factor angle $\phi_i$ determined at stage d).

3. A method as per claim 2, characterized in that the conduction angle $\Theta_i$ of the effective current $i_{si}$ flowing through the secondary circuit of the welding transformer is metered at each half-wave from the firing instant of each thyristor of the thyristorized electronic contactor of the primary circuit of the welding transformer up to the point in time when the intensity $i_{si}$ of the current of the secondary circuit is equal to zero or to a sufficiently low value.

4. A method as per claim 2, characterized in that the firing angle $\Psi_{i+1}$ of the second semiperiod of the line voltage $U_L$ feeding the primary coil of the welding transformer as from the zero crossing point of said line voltage $U_L$ and triggering the second thyristor of the electronic contactor has a value which is identical with the firing angle $\Psi_i$ of the first thyristor.

5. A method as per claim 2, characterized in that the firing angles $\Psi_1$ and $\Psi_2$ of the two initial semiperiods are determined from the programmed current value $I_p$ to be kept constant, and from the values of a power factor angle $\phi$ and of a maximum current $I_{max}$ determined during a previous welding job and stored in a memory of the microprocessor or microcomputer.

6. A method as per claim 2, characterized in that in the case of an unpreceded welding job the firing angles $\Psi_1$ and $\Psi_2$ of the two initial semiperiods have an arbitrary value which does nevertheless originate a minimum or nondangerous effective current $I_s$.

7. A method as per claim 2, characterized in that stage k) comprises a look-up phase for looking up a list of values arranged as data tables and corresponding to preset welding conditions determined from the relationship linking the quotient $I_p/I_{max}$ with the firing angle $\Psi$ and the power factor angle $\phi$ for a given conduction angle $\Theta_c$, said list of values being stored in a memory of the microprocessor or microcomputer and comprising operations carried out by the microprocessor or microcomputer by acceding to said list of values from the values of a conduction angle $\Theta_{ci}$ and a firing angle $\Psi_{i-2}$ corresponding to two previous semiperiods of the line voltage $U_L$ feeding the primary coil of the welding transformer.

## Patentansprüche

1. Elektronisches Steuerungssystem eines Schweissverfahrens in einer Widerstandsschweisseinrichtung wie, zum Beispiel, eine Punktschweisszange, Automatenzange, Mehrpunktschweissmaschine, wobei die Stromregelung der Primärwicklung eines Schweiss-transformators (10) mittels eines elektronisches Schützes in Form von zwei in einer Antiparallelschaltung angeordneten Thyristoren, welche durch eine Kontrolleinheit der Zündung besagter Thyristoren gesteuert werden, wobei diese wiederum durch einen Mikroprozessor oder Mikrocomputer (11) gesteuert wird, damit der Istwert des von der Sekundärwicklung gelieferten Stromes $I_s$ erwähnten Schweisstransformators während des Schweissvorgangs einen Wert beibehält, der konstant und gleich einem vorbestimmten Wert $I_p$ oder vorbestimmten Strom ist, unabhängig der Impendanzänderungen des Schweissstromkreises durch welchen dieser Strom fliesst, <u>dadurch gekennzeichnet</u>, daß mit obig erwähntem Mikroprozessor oder Mikrocomputer folgende Elemente mitarbeiten:

- Detektoren, welche den Nulldurchgang der von der Primärwickung des Schweisstransformators gelieferten Spannung $U_L$ feststellen;

- Mittel (12) zur Zündung der Thyristoren des elektronischen Schützes mit einem vorbestimmten Winkel $\Psi_i$ oder vorbestimmter Zündzeit $t_d$;

- Mittel zur Feststellung des Stromstärke-Istwertes $I_{si}$ des Stromes, der durch die Sekundärwicklung des Schweisstransformators, nach Zündung des entsprechenden Thyristors in eben erwähntem elektronischen Schütz, geflossen ist;

- Mittel zur Festellung des Nulldurgangs der Stromstärke $i_{si}$, welche durch die Sekundärcicklung des Schweisstransformators, nach Zündung des ensprenchenden Schützes gennanten elektronischen Tyristorschützes, fliesst;

- Mittel (23), zur Speicherung und Ansammlung der Stromstärke-Istwerte $I_{si}$, welche für jede Halbperiode der Schweisszeit ermittelt wurden;

- Mittel (22) zur tabellarischen Speicherung von ermittelten Werten in Form in Abhängigkeit von Leistungsfaktorwinkel $\phi$, Stromflusszeit $t_c$ und Zündwinkel $\Psi$ und welche vorbestimmten Schweissbedingungen entsprechen, die ab der Relation zwischen dem Quotienten $I_s/I_{max}$ mit dem Zündwinkel $\Psi$ und dem Stromflusswinkel $\phi$ mit einer vorbestimmten Stromflusszeit $t_c$ in der erwähnten Sekundärschaltung entstehen.

2. Elektronisches Steuerungsverfahren eines Schweissvorganges in einer Widerstandsschweisseinrichtung wie, zum Beispiel, eine Punktschweisszange, Automatenzange, Mehrpunktschweissmaschine, wobei die Stromregelung der Primärwicklung eines Schweisstransformators (10) mittels eines elektronisches Schützes in Form von zwei in einer Antiparallelschaltung angeordneten Thyristoren, welche durch eine Kontrolleinheit der Zündung besagter Thyristoren gesteuert werden, wobei diese wiederum durch einen Mikroprozessor oder Mikrocomputer gesteuert wird, damit der Istwert des von der Sekundärwicklung gelieferten Stromes $I_s$ erwähnten Schweisstransformators während des Schweissvorgangs einen Wert beibehält, der konstant und gleich einem vorbestimmten Wert $I_p$ oder Sollstrom ist, unabhängig der Impendanzänderungen des Schweissstromkreises durch welchen dieser Strom fliesst, welches folgende Abläufe aufweist:

a) Festlegung, in jeder Halbperiode, des Nulldurchgangs der Leitungsspannung $U_L$, mit welcher die Primärwicklung des Schweisstransformators gespeist wird;

b) Zündung, in jeder eben erwähnten Halbperiode, eines Thyristors des elektronisches Schützes, um so eine Stromhalbwelle, mit einem vorbestimmten Zündwinkel $\Psi_i$, in der Sekundärwicklung des Schweisstransformators zu erzeugen;

c) Messung, bei jeder eben erwähnter Halbperioden, des Stromstärke-Istwertes $I_{si}$ in der Sekundärschaltung des Schweisstransformators, mit Berücksichtigung der Schweissbelastung und Festlegung des Stromflusswinkels $\Theta_i$, welcher eben erwähntem Sekundärstrom entspricht;

d) Ermittlung, in jeder obig aufgeführter Halbperioden, eines Leistungsfaktorwinkels $\phi_i$, ausgehend von dem Wert des Zündwinkels $\Psi_i$ des Thyristors der zu Anfang erwähnter Periode der Leitungsspannung $U_L$ ermittelt wurde und des in dem Ablauf c) ermittelten Stromflusswinkels $\Theta_i$;

e) Feststellung in jeder der erwähnten Kalbperioden der maximalen Stromstärke $I_{max}$, welche unter den jeweils gegebenen Belastungsbedingungen vorliegen, ausgehend von dem

Leistungsfaktorwinkel $\phi_i$, welcher in Ablauf d) festgelegt wurde und des Zündwinkels $\Psi_i$, der in diesem Ablauf zum Einsatz kommt, sowie des Stromstärke-Istwertes $I_{ci}$ der in Ablauf c) festgelegt wurde dadurch gekennzeichnet, daß folgende zusätzliche Abläufe mitinbegriffen werden:

f) Addition des in Ablauf c) festgelegten Stromstärke-Istwertes $I_{si}$, bei jeder Halbperiode der Leitungsspannung $U_L$, welche der Primärwicklung des Schweisstransformators zugeführt wird, einer Gesamtsumme (stock) aller in vorgehenden Abläufen ermittelten Werte, um so einen gesamten Akkumulativwert zu erhalten;

g) Vergleich, in jeder der erwähnten Halbperioden, des besagten Stromstärke-Istwertes $I_{si}$, in Ablauf c) gemessen, mit dem Stromstärke-Sollwert $I_p$ und Festlegung eines Ableitungwertes $\underline{e} = I_p - I_{si}$;

h) Festlegung, in jeder Halbperiode, eines akkumalativen Differenzwertes $\underline{d}$, ausgehend von der Differenz zwischen der in Ablauf f) ermittelten Gesamtsumme und einer äquivalenten Akkumulativsumme, welche dadurch ermittelt wird, daß angenommen wird, daß der Stromstärke-Sollwert $I_p$ in gleicher, eben erwähnter Anzahl Halbperioden geflossen ist;

k) Errechnung, für jede Halbperiode, eines Zündwinkkels $\Psi_{i+2}$ für jede folgende Periode der Leitungsspannung $U_L$ und zwar, ab jedem Nulldurchgang eben erwähnter Leitungsspannug $U_L$, mit Berücksichtigung des Ableitungwertes $\underline{e}$, der akkumulativen Differenz $\underline{d}$, der in Ablauf e) ermittelten maximalen Stromstärke $I_{max}$, des Stromstärke-Sollwertes $I_p$ und das in Ablauf d) ermittelten Leistungsfaktorwinkels $\phi_i$.

3. Verfahren nach Anspruch 2, dadurch gekennzeichnet, daß der Stromflusswinkel $\Theta_i$ des Stromstärke-Istwertes $I_{si}$, welche durch die Sekundärschaltung des Schweisstransformators fliesst, in jeder Halbwelle gemessen wird, ab der Zündung eines jeden Thyristors des elektronischen Schützes, das aus Thyristoren besteht, der Primärschaltung des Schweisstransformators, bis die Stromstärke $I_{si}$ der Sekundärschaltung gleich Null oder ausreichend schwach ist.

4. Verfahren nach Anspruch 2, dadurch gekennzeichnet, daß der Zündwinkel $\Psi_{i+1}$ der zweiten Halbperiode der Leitungsspannug $U_L$, welche die Primärwicklung des Schweisstransformators speist, ab dem Nulldurchgang erwähnter Leitungsspannug $U_L$, wo auch der zweite Thyristor des elektronischen Schützes betätigt wird, einen Wert aufweist, der gleich dem Wert des Zündwinkels des ersten Thyristors $\Psi_i$ ist.

5. Verfahren nach Anspruch 2, dadurch gekennzeichnet, daß die Zündwinkel $\Psi_1$ und $\Psi_2$ der zwei anfänglichen Halbperioden ab dem Wert des Stromstärke-Sollwertes $I_p$, welcher konstant gehalten werden muß, bestimmt werden und ab den Werten eines Leistungsfaktorwinkels $\phi$ und einer maximalen Stromstärke $I_{max}$, welche in einer vorgänglichen Schweissung festgestellt wurden und im Mikroprozessor oder Mikrocomputer gespeichert wurden, bestimmt werden.

6. Verfahren nach Anpruch 2, dadurch gekennzeichnet, daß bei einer Erstschweissung die Zündwinkel $\Psi_1$ und $\Psi_2$ der zwei anfänglichen Halbperioden einen beliebigen Wert annehmen, aber einen minimalen oder ungefährlichen Stromstärke-Istwert $I_s$ erzeugen.

7. Verfahren nach Anspruch 2, dadurch gekennzeichnet, daß der Ablauf k) einen Abrufphase einer tabellarisch geordneten Werteliste beinhaltet, welche vorgänglich festgestellten Schweissbedingungen entsprechen und ab der Relation zwischen dem Quotienten $I_p/I_{max}$ mit dem Zündwinkel $\Psi$ und dem Leistungsfaktorwinkels $\phi$, bei einem vorbestimmten Stromflusswinkel $\Theta_c$, bestimmt werden, wobei die Werteliste in einem Speicher des Mikroprozessors oder Mikrocomputers gespeichert wird und Vorgänge beinhaltet, die von dem Mikroprozessor oder Mikrocomputer betätigt werden, bei welchen erwähnte Werteliste, ab den Werten eines Stromflusswinkels $\Theta_{ci}$ und eines Zündwinkels $\Psi_{i+2}$, welche zwei vorgangenen Halbperioden der Leitungsspannung, die die Primärwicklung des Schweisstransformators speist, entsprechen, in einem Speicher des Mikroprozessors oder Mikrocomputers gespeichert wird.

FIG. 1

FIG. 2